# EUROPÄISCHE PATENTSCHRIFT

(11) **EP 0 803 514 B1**
(45) Veröffentlichungstag und Bekanntmachung des Hinweises auf die Patenterteilung: **01.12.1999**
(21) Anmeldenummer: 97106319.3
(22) Anmeldetag: 17.04.1997
(51) Int. Cl.: C08F 2/44, C08F 10/00, C08F 4/602, C08F 2/34

(54) **Verfahren zur Herstellung von Polyalk-1-enen in Gegenwart eines geträgerten Metallocenkatalysatorsystems und eines Antistatikums**
Process for the preparation of polyalk-1-enes in the presence of a supported metallocene catalyst system and an antistaticum
Procédé de préparation de polymères alc-1-ènes en présence d'un système catalytique à base de métallocène supporté et d'un agent antistatique

(30) Priorität: 22.04.1996 DE 19615953
(43) Veröffentlichungstag der Anmeldung: 29.10.1997
(73) Patentinhaber: BASF AKTIENGESELLSCHAFT, 67056 Ludwigshafen (DE)
(72) Erfinder: Fischer, David, Dr., 67161 Gönnheim (DE); Frank, Helmut, 67459 Böhl-Iggelheim (DE); Lux, Martin, Dr., 67125 Dannstadt-Schauernheim (DE); Hingmann, Roland, Dr., 68526 Ladenburg (DE); Schweier, Günther, Dr., 67159 Friedelsheim (DE)

(56) Entgegenhaltungen:
- EP-A- 0 535 230
- EP-A- 0 679 661
- EP-A- 0 745 607
- WO-A-94/26793
- WO-A-96/32420
- US-A- 5 459 217

## Beschreibung

Die vorliegende Erfindung betrifft Verfahren zur Herstellung von Polymerisaten von C₂- bis C₁₂-Alk-1-enen, wobei als Alk-1-ene
50 bis 100 mol-% Propen,
0 bis 50 mol-% Ethylen und
0 bis 20 mol-% C₄- bis C₁₂-Alk-1-ene
eingesetzt werden,
bei Temperaturen im Bereich von 0 bis 150°C und Drucken im Bereich von 1 bis 80 bar in Gegenwart eines Katalysatorsystems.

Die hierbei erhältlichen Polymerisate dienen zur Herstellung von Fasern, Folien und Formkörpern sowie die daraus erhältlichen Fasern, Folien und Formköper.

Metallocenkatalysatoren erlauben die Herstellung neuartiger Polyolefine. Für eine kommerzielle Nutzung solcher Metallocenkatalysatoren in gängigen technischen Verfahren ist gewöhnlich eine Trägerung erforderlich, da hierdurch Polymerisate mit verbesserter Morphologie erhalten werden, wie in der EP-A 294 942 beschrieben. Allerdings zeigen die bisherigen geträgerten Metallocenkatalysatoren eine stärkere Tendenz zur Bildung von Polymerisationsagglomerationen oder Ablagerungen als moderne Ziegler-Natta-Trägerkatalysatoren. Hinzu kommt eine nach wie vor recht geringe Produktivität der geträgerten Metallocenkatalysatoren.

Die Verwendung von Antistatika als belagmindernder Zusatz bei der Ethylenpolymerisation ist bei der Verwendung von Ziegler- oder Phillips-Katalysatoren beschrieben, beispielsweise in der EP-A 636 636. Durch die Verwendung von Ziegler- oder Phillips-Katalysatoren werden jedoch Polymerisate mit beispielsweise breiter Molekulargewichtsverteilung erhalten. Der Zusatz von Antistatika zu Ziegler- oder Phillips-Katalysatoren führt nicht zu einer Verbesserung der Produktivität des Katalysators.

Die WO 94/26793 beschreibt ein Verfahren zur Herstellung von geträgerten Katalysatorsystemen, bei dem ein wasserhaltiges Trägermaterial bei im wesentlichen konstanter Temperatur mit einer metallorganischen Verbindung umgesetzt wird, sowie die Polymerisation von Ethylen mittels eines so hergestellten Katalysatorsystems in Gegenwart eines Antistatikums.

Die EP-A 535 230 offenbart Verfahren zur Herstellung von kautschukartigen Ethylen-Copolymerisaten, bei denen die Polymerisation in Gegenwart eines Antistatikums stattfinden kann.

Aufgabe der vorliegenden Erfindung war es daher, Verfahren zur Herstellung von Polymerisaten von C₂- bis C₁₂-Alk-1-enen zur Verfügung zu stellen, bei denen Polymerisate mit enger Molekulargewichtsverteilung entstehen, die in technischen Maßstab durchgeführt werden können und bei denen keine Belag- und Agglomeratbildung auftritt. Zudem sollte die Produktivität der eingesetzten Katalysatorsysteme verbessert werden.

Demgemäß wurden Verfahren zur Herstellung von Polymerisaten von C₂- bis C₁₂-Alk-1-enen, wobei als Alk-1-ene
50 bis 100 mol-% Propen,
0 bis 50 mol-% Ethylen und
0 bis 20 mol-% C₄- bis C₁₂-Alk-1-ene
eingesetzt werden,
bei Temperaturen im Bereich von 0 bis 150°C und Drücken von 1 bis 80 bar in Gegenwart eines Katalysatorsystems gefunden, wobei man als Katalysatorsystem ein solches verwendet, das
A) einen anorganischen oder organischen Träger,
B) einen Metallocenkomplex der allgemeinen Formel IVc, 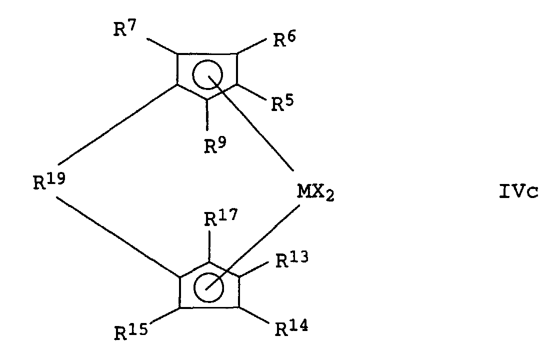 und
   in der die Substituenten folgende Bedeutung haben:
   - M: Titan, Zirkonium, Hafnium, Vanadium, Niob oder Tantal
   - X: Fluor, Chlor, Brom, Iod, Wasserstoff, C₁- bis C₁₀-Alkyl, C₆- bis C₁₅-Aryl, Alkylaryl mit 1 bis 10 C-Atomen im Alkylrest und 6 bis 20 C-Atomen im Arylrest, -OR¹⁰ oder -NR¹⁰R¹¹,
   wobei
   - R¹⁰ und R¹¹: C₁- bis C₁₀-Alkyl, C₆- bis C₁₅-Aryl, Alkylaryl, Arylalkyl, Fluoralkyl oder Fluoraryl mit jeweils 1 bis 10 C-Atomen im Alkylrest und 6 bis 20 C-Atomen im Arylrest bedeuten,
   - R⁵ bis R⁷, R⁹, R¹³ bis R¹⁵ und R¹⁷: Wasserstoff, C₁- bis C₁₀-Alkyl, 5- bis 7-gliedriges Cycloalkyl, das seinerseits ein C₁- bis C₁₀-Alkyl als Substituent tragen kann, C₆- bis C₁₅-Aryl oder Arylalkyl, wobei gegebenenfalls auch zwei benachbarte Reste gemeinsam für 4 bis 15 C-Atome aufweisende gesättigte oder ungesättigte cyclische Gruppen stehen können, oder Si(R¹²)₃ mit
   - R¹²: C₁- bis C₁₀-Alkyl, C₃- bis C₁₀-Cycloalkyl oder C₆- bis C₁₅-Aryl bedeuten,
   - R¹⁹: 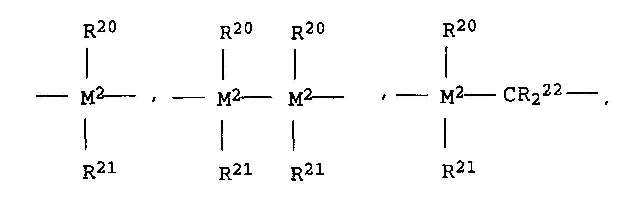 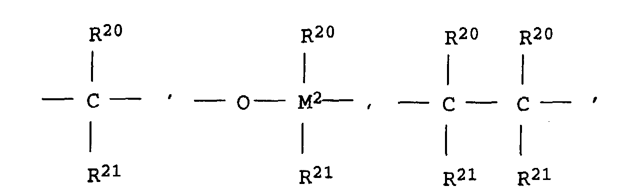 = BR²⁰, = AlR²⁰, -Ge-, -Sn-, -O-, -S-, = SO, = SO₂, = NR²⁰, = CO, = PR²⁰ oder = P(O)R²⁰ ist,
   wobei
   - R²⁰, R²¹ und R²²: gleich oder verschieden sind und ein Wasserstoffatom, ein Halogenatom, eine C₁-C₁₀-Alkylgruppe, eine C₁-C₁₀-Fluoralkylgruppe, eine C₆-C₁₀-Fluorarylgruppe, eine C₆-C₁₀-Arylgruppe, eine C₁-C₁₀-Alkoxygruppe, eine C₂-C₁₀-Alkenylgruppe, eine C₇-C₄₀-Arylalkylgruppe, eine C₈-C₄₀-Arylalkenylgruppe oder eine C₇-C₄₀-Alkylarylgruppe bedeuten oder wobei zwei benachbarte Reste jeweils mit den sie verbindenden Atomen einen Ring bilden, und
   - M²: Silicium, Germanium oder Zinn ist,
C) eine metalloceniumionenbildende Verbindung und
D) gegebenenfalls eine Metallverbindung der allgemeinen Formel I

   M¹ (R¹)ᵣ (R²)ₛ (R³)ₜ I

   in der
   - M¹: ein Alkali-, ein Erdalkalimetall oder ein Metall der III. Hauptgruppe des Periodensystems bedeutet,
   - R¹: Wasserstoff, C₁- bis C₁₀-Alkyl, C₆- bis C₁₅-Aryl, Alkylaryl oder Arylalkyl mit jeweils 1 bis 10 C-Atomen im Alkylrest und 6 bis 20 C-Atomen im Arylrest,
   - R² und R³: Wasserstoff, Halogen, C₁- bis C₁₀-Alkyl, C₆- bis C₁₅-Aryl, Alkylaryl, Arylalkyl oder Alkoxy mit jeweils 1 bis 10 C-Atomen im Alkylrest und 6 bis 20 C-Atomen im Arylrest,
   - r: eine ganze Zahl von 1 bis 3
   und
   - s und t: ganze Zahlen von 0 bis 2 bedeuten, wobei die Summe r+s+t der Wertigkeit von M¹ entspricht,
   enthält,
und daß man bei der Polymerisation ein Antistatikum zugibt.

Außerdem wurde die Verwendung der hierbei erhältlichen Polymerisate zur Herstellung von Fasern, Folien und Formkörpern gefunden sowie die daraus erhältlichen Fasern, Folien und Formkörper.

Von den bei dem erfindungsgemäßen Verfahren eingesetzten C₂- bis C₁₂-Alk-1-enen sind Ethylen, Propen, But-1-en, Pent-1-en, 4-Methyl-pent-1-en, Hex-1-en, Hept-1-en oder Oct-1-en, sowie Gemische aus diesen C₂- bis C₁₂-Alk-1-enen bevorzugt. Hergestellt werden Homo- oder Copolymerisate des Propens, wobei der Anteil an Propen in den Copolymerisaten mindestens 50 mol-% beträgt. Bei den Copolymerisaten des Propens sind diejenigen bevorzugt, die als weitere Monomere Ethylen oder But-1-en oder deren Mischungen enthalten.

Vorzugsweise werden als Alk-1-ene
50 bis 100 mol-% Propen
0 bis 30 mol-% Ethylen und
0 bis 20 mol-%, insbesondere 0 bis 10 mol-%. C₄- bis C₁₂-Alk-1-ene
eingesetzt.

Werden Copolymerisate des Propens mit Ethylen hergestellt, so beträgt die Menge an Ethylen vorzugsweise 0,5 bis 50 mol-%.

Die Summe der mol-% ergibt stets 100.

Das erfindungsgemäße Verfahren wird bei Temperaturen im Bereich von 0 bis 150°C und bei Drücken im Bereich von 1 bis 80 bar durchgeführt.

Die Polymerisation kann in Lösung, in Suspension, in flüssigen Monomeren oder in der Gasphase durchgeführt werden. Bevorzugt erfolgt die Polymerisation in flüssigen Monomeren oder in der Gasphase, wobei die gerührte Gasphase bevorzugt ist.

Das Verfahren kann sowohl kontinuierlich oder diskontinuierlich durchgeführt werden. Geeignete Reaktoren sind u.a. kontinuierlich betriebene Rührkessel, wobei man gegebenenfalls auch eine Reihe von mehreren hintereinander geschalteten Rührkesseln verwenden kann (Reaktorkaskade).

Das bei dem erfindungsgemäßen Verfahren eingesetzte Katalysatorsystem enthält als Komponente A) einen anorganischen oder organischen Träger. Als Trägermaterialien werden vorzugsweise feinteilige Träger eingesetzt, die bevorzugt einen Teilchendurchmesser im Bereich von 1 bis 300 µm aufweisen, insbesondere von 30 bis 70 µm. Geeignete anorganische Träger sind beispielsweise Magnesiumchlorid oder Kieselgele, bevorzugt solche der Formel SiO₂ ^{.} a Al₂O₃, worin a für eine Zahl im Bereich von 0 bis 2 steht, vorzugsweise 0 bis 0,5; dies sind also Alumosilikate oder Siliciumdioxid. Derartige Produkt sind im Handel erhältlich, z.B. Silica Gel 332 der Fa. Grace. Als organische Träger sind beispielsweise feinteilige Polyolefine geeignet, z.B. feinteiliges Polypropylen.

Die Menge an Träger beträgt vorzugsweise 50 bis 99,9 Gew.-%, bezogen auf Metallocenkomplex (Komponente B).

Als Komponente B) enthält das bei dem erfindungsgemäßen Verfahren eingesetzte Katalysatorsystem einen oder mehrere Metallocenkomplexe der allgemeinen Formel IVc 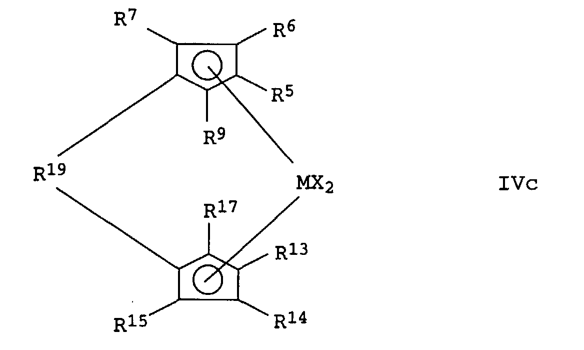 in der die Substituenten folgende Bedeutung haben:
- M: Titan, Zirkonium, Hafnium, Vanadium, Niob oder Tantal
- X: Fluor, Chlor, Brom, Iod, Wasserstoff, C₁- bis C₁₀-Alkyl, C₆- bis C₁₅-Aryl, Alkylaryl mit 1 bis 10 C-Atomen im Alkylrest und 6 bis 20 C-Atomen im Arylrest, -OR¹⁰ oder -NR¹⁰R¹¹,
wobei
- R¹⁰ und R¹¹: C₁- bis C₁₀-Alkyl, C₆- bis C₁₅-Aryl, Alkylaryl, Arylalkyl, Fluoralkyl oder Fluoraryl mit jeweils 1 bis 10 C-Atomen im Alkylrest und 6 bis 20 C-Atomen im Arylrest bedeuten,
- R⁵ bis R⁷, R⁹, R¹³ bis R¹⁵ und R¹⁷: Wasserstoff, C₁- bis C₁₀-Alkyl, 5- bis 7-gliedriges Cycloalkyl, das seinerseits ein C₁- bis C₁₀-Alkyl als Substituent tragen kann, C₆- bis C₁₅-Aryl oder Arylalkyl, wobei gegebenenfalls auch zwei benachbarte Reste gemeinsam für 4 bis 15 C-Atome aufweisende gesättigte oder ungesättigte cyclische Gruppen stehen können, oder Si(R¹²)₃ mit
- R¹²: C₁- bis C₁₀-Alkyl, C₃- bis C₁₀-Cycloalkyl oder C₆- bis C₁₅-Aryl bedeuten,
- R¹⁹: 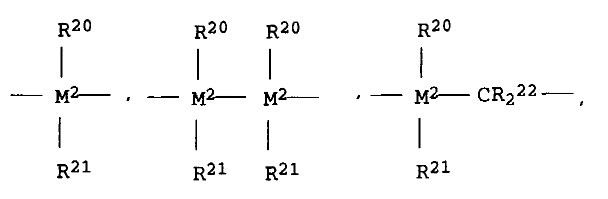 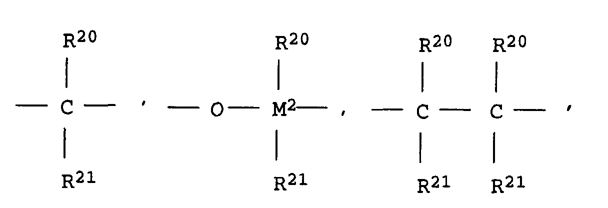
= BR²⁰, = AlR²⁰, -Ge-, -Sn-, -O-, -S-, = SO, = SO₂, = NR²⁰, = CO, = PR²⁰ oder = P(O)R²⁰ ist,
wobei
- R²⁰, R²¹ und R²²: gleich oder verschieden sind und ein Wasserstoffatom, ein Halogenatom, eine C₁-C₁₀-Alkylgruppe, eine C₁-C₁₀-Fluoralkylgruppe, eine C₆-C₁₀-Fluorarylgruppe, eine C₆-C₁₀-Arylgruppe, eine C₁-C₁₀-Alkoxygruppe, eine C₂-C₁₀-Alkenylgruppe, eine C₇-C₄₀-Arylalkylgruppe, eine C₈-C₄₀-Arylalkenylgruppe oder eine C₇-C₄₀-Alkylarylgruppe bedeuten oder wobei zwei benachbarte Reste jeweils mit den sie verbindenden Atomen einen Ring bilden, und
- M²: Silicium, Germanium oder Zinn ist.

Die Reste X können gleich oder verschieden sein, bevorzugt sind sie gleich.

Von den Verbindungen der Formel IVc sind diejenigen besonders geeignet, in denen
- R⁵ und R¹³: gleich sind und für Wasserstoff oder C₁- bis C₁₀-Alkylgruppen stehen,
- R⁹ und R¹⁷: gleich sind und für Wasserstoff, eine Methyl-, Ethyl-, iso-Propyl- oder tert.-Butylgruppe stehen
- R⁶, R⁷, R¹⁴ und R¹⁵: die Bedeutung
R⁷ und R¹⁵ C₁- bis C₄-Alkyl
R⁶ und R¹⁴ Wasserstoff
haben oder zwei benachbarte Reste R⁶ und R⁷ sowie R¹⁴ und R¹⁵ gemeinsam für 4 bis 12 C-Atome aufweisende cyclische Gruppen stehen,
- R¹⁹: für 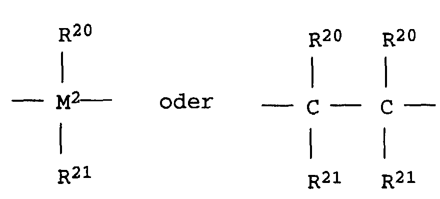 steht,
- M: für Titan, Zirkonium oder Hafnium und
- X: für Chlor, C₁-bis C₄-Alkyl oder Phenyl stehen.

Beispiele für besonders geeignete Komplexverbindungen sind u.a.
Dimethylsilandiylbis(cyclopentadienyl)-zirkoniumdichlorid,
Dimethylsilandiylbis(indenyl)-zirkoniumdichlorid,
Dimethylsilandiylbis(tetrahydroindenyl)-zirkoniumdichlorid,
Ethylenbis(cyclopentadienyl)-zirkoniumdichlorid,
Ethylenbis(indenyl)-zirkoniumdichlorid,
Ethylenbis(tetrahydroindenyl)-zirkoniumdichlorid,
Tetramethylethylen-9-fluorenylcyclopentadienylzirkoniumdichlorid,
Dimethylsilandiylbis(-3-tert.butyl-5-methylcyclopentadienyl)zirkoniumdichlorid,
Dimethylsilandiylbis(-3-tert.butyl-5-ethylcyclopentadienyl)zirkoniumdichlorid,
Dimethylsilandiylbis(-2-methylindenyl)-zirkoniumdichlorid,
Dimethylsilandiylbis(-2-isopropylindenyl)-zirkoniumdichlorid,
Dimethylsilandiylbis(-2-tert.butylindenyl) -zirkoniumdichlorid,
Diethylsilandiylbis (-2-methylindenyl)-zirkoniumdibromid,
Dimethylsilandiylbis(-3-methyl-5-methylcyclopentadienyl)-zirkoniumdichlorid,
Dimethylsilandiylbis(-3-ethyl-5-isopropylcyclopentadienyl)-zirkoniumdichlorid,
Dimethylsilandiylbis(-2-methylindenyl)-zirkoniumdichlorid,
Dimethylsilandiylbis(-2-methylbenzindenyl)-zirkoniumdichlorid
Dimethylsilandiylbis(2-ethylbenzindenyl)zirkoniumdichlorid,
Methylphenylsilandiylbis(2-ethylbenzindenyl)zirkoniumdichlorid,
Methylphenylsilandiylbis(2-methylbenzindenyl)zirkoniumdichlorid,
Diphenylsilandiylbis(2-methylbenzindenyl)zirkoniumdichlorid,
Diphenylsilandiylbis(2-ethylbenzindenyl)zirkoniumdichlorid, und
Dimethylsilandiylbis(-2-methylindenyl)-hafniumdichlorid
sowie die entsprechenden Dimethylzirkoniumverbindungen.

Die Synthese derartiger Komplexverbindungen kann nach an sich bekannten Methoden erfolgen, wobei die Umsetzung der entsprechend substituierten, cyclischen Kohlenwasserstoffanionen mit Halogeniden von Titan, Zirkonium, Hafnium, Vanadium, Niob oder Tantal, bevorzugt ist.

Beispiele für entsprechende Herstellungsverfahren sind u.a. im Journal of Organometallic Chemistry, 369 (1989), 359-370 beschrieben.

Es können auch Mischungen verschiedener Metallocenkomplexe eingesetzt werden.

Als Komponente C) enthält das bei dem erfindungsgemäßen Verfahren eingesetzte Katalysatorsystem eine metalloceniumionenbildende Verbindung.

Geeignete metalloceniumionenbildende Verbindungen sind starke, neutrale Lewissäuren, ionische Verbindungen mit lewissauren Kationen und ionische Verbindungen mit Brönsted-Säuren als Kation.

Als starke, neutrale Lewissäuren sind Verbindungen der allgemeinen Formel V

M³X¹X²X³ V

bevorzugt, in der
- M³: ein Element der III. Hauptgruppe des Periodensystems bedeutet, insbesondere B, Al oder Ga, vorzugsweise B,
- X¹, X² und X³: für Wasserstoff, C1- bis C10-Alkyl, C6- bis C15-Aryl, Alkylaryl, Arylalkyl, Halogenalkyl oder Halogenaryl mit jeweils 1 bis 10 C-Atomen im Alkylrest und 6 bis 20 C-Atome im Arylrest oder Fluor, Chlor, Brom oder Jod stehen, insbesondere für Halogenaryle, vorzugsweise für Pentafluorphenyl.

Besonders bevorzugt sind Verbindungen der allgemeinen Formel V, in der X¹, X² und X³ gleich sind, vorzugsweise Tris(pentafluorphenyl)boran.

Als ionische Verbindungen mit lewissauren Kationen sind Verbindungen der allgemeinen Formel VI

[(Y^{a+})Q₁Q₂...Q_{z}]^{d+} VI

geeignet, in denen
- Y: ein Element der I. bis VI. Hauptgruppe oder der I. bis VIII. Nebengruppe des Periodensystems bedeutet,
- Q₁ bis Q_{z}: für einfach negativ geladene Reste wie C₁- bis C₂₈-Alkyl, C₆- bis C₁₅-Aryl, Alkylaryl, Arylalkyl, Halogenalkyl, Halogenaryl mit jeweils 6 bis 20 C-Atomen im Aryl- und 1 bis 28 C-Atome im Alkylrest, C₁- bis C₁₀-Cycloalkyl, welches gegebenenfalls mit C₁- bis C₁₀-Alkylgruppen substituiert sein kann, Halogen, C₁- bis C₂₈-Alkoxy, C₆- bis C₁₅-Aryloxy, Silyl- oder Mercaptylgruppen
- a: für ganze Zahlen von 1 bis 6 steht
- z: für ganze Zahlen von 0 bis 5
- d: der Differenz a-z entspricht, wobei d jedoch größer oder gleich 1 ist.

Besonders geeignet sind Carboniumkationen, Oxoniumkationen und Sulfoniumkationen sowie kationische Übergangsmetallkomplexe. Insbesondere sind das Triphenylmethylkation, das Silberkation und das 1,1'-Dimethylferrocenylkation zu nennen. Bevorzugt besitzen sie nicht koordinierende Gegenionen, insbesondere Borverbindungen, wie sie auch in der WO 91/09882 genannt werden, bevorzugt Tetrakis(pentafluorophenyl)borat.

Ionische Verbindungen mit Brönsted-Säuren als Kationen und vorzugsweise ebenfalls nicht koordinierende Gegenionen sind in der WO 91/09882 genannt, bevorzugtes Kation ist das N,N-Dimethylanilinium.

Die Menge an metalloceniumionenbildenden Verbindungen beträgt bevorzugt 0,1 bis 10 Äquivalente, bezogen auf den Metallocenkomplex IV.

Besonders geeignet als metalloceniumionenbildende Verbindung C) sind offenkettige oder cyclische Alumoxanverbindungen der allgemeinen Formel II oder III 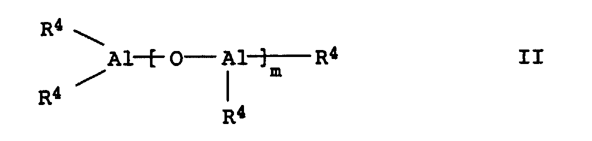 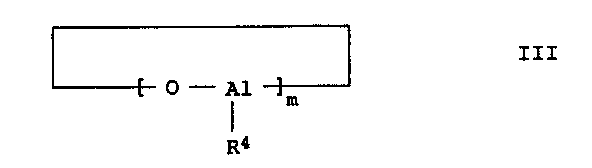 wobei
- R⁴: eine C₁- bis C₄-Alkylgruppe bedeutet, bevorzugt Methyl- oder Ethylgruppe und m für eine ganze Zahl von 5 bis 30, bevorzugt 10 bis 25 steht.

Die Herstellung dieser oligomeren Alumoxanverbindungen erfolgt üblicherweise durch Umsetzung einer Lösung von Trialkylaluminium mit Wasser und ist u.a. in der EP-A 284 708 und der US A 4,794,096 beschrieben.

In der Regel liegen die dabei erhaltenen oligomeren Alumoxanverbindungen als Gemische unterschiedlich langer, sowohl linearer als auch cyclischer Kettenmoleküle vor, so daß m als Mittelwert anzusehen ist. Die Alumoxanverbindungen können auch im Gemisch mit anderen Metallalkylen, bevorzugt mit Aluminiumalkylen vorliegen.

Vorzugsweise werden sowohl die Metallocenkomplexe (Komponente B) als auch die metalloceniumionenbildende Verbindungen (Komponente C) in Lösung eingesetzt, wobei aromatische Kohlenwasserstoffe mit 6 bis 20 C-Atomen, insbesondere Xylole und Toluol, besonders bevorzugt sind.

Weiterhin können als Komponente C) Aryloxyalumoxane, wie in der US-A 5,391,793 beschrieben, Aminoaluminoxane, wie in der US-A 5,371,260 beschrieben, Aminoaluminoxanhydrochloride, wie in der EP-A 633 264 beschrieben, Siloxyaluminoxane, wie in der EP-A 621 279 beschrieben, oder Mischungen daraus eingesetzt werden.

Es hat sich als vorteilhaft erwiesen, die Metallocenkomplexe und die oligomere Alumoxanverbindung in solchen Mengen zu verwenden, daß das atomare Verhältnis zwischen Aluminium aus der oligomeren Alumoxanverbindung und dem Übergangsmetall aus den Metallocenkomplexen im Bereich von 10:1 bis 10⁶:1, insbesondere im Bereich von 10:1 bis 10⁴:1, liegt.

Das bei dem erfindungsgemäßen Verfahren eingesetzte Katalysatorsystem kann als Komponente D) gegebenenfalls noch eine Metallverbindung der allgemeinen Formel I

M¹ (R¹)ᵣ (R²)ₛ (R³)ₜ I

in der
- M¹: ein Alkali-, ein Erdalkalimetall oder ein Metall der III. Hauptgruppe des Periodensystems, d.h. Bor, Aluminium, Gallium, Indium oder Thallium bedeutet,
- R¹: Wasserstoff, C₁- bis C₁₀-Alkyl, C₆- bis C₁₅-Aryl, Alkylaryl oder Arylalkyl mit jeweils 1 bis 10 C-Atom im Alkylrest und 6 bis 20 C-Atomen im Arylrest,
- R² und R³: Wasserstoff, Halogen, C₁- bis C₁₀-Alkyl, C₆- bis C₁₅-Aryl, Alkylaryl, Arylalkyl oder Alkoxy mit jeweils 1 bis 10 C-Atomen im Alkylrest und 6 bis 20 C-Atomen im Arylrest,
- r: eine ganze Zahl von 1 bis 3
und
- s und t: ganze Zahlen von 0 bis 2 bedeuten, wobei die Summe r+s+t der Wertigkeit von M¹ entspricht,
enthalten.

Von den Metallverbindungen der allgemeinen Formel I sind diejenigen bevorzugt, in denen
- M¹: Lithium, Magnesium oder Aluminium bedeutet und
- R¹ bis R³: für C₁- bis C₁₀-Alkyl stehen.

Besonders bevorzugte Metallverbindungen der Formel I sind n-Butyl-Lithium, n-Butyl-n-octyl-Magnesium, n-Butyl-n-heptyl-Magnesium, Tri-n-hexyl-aluminium, Tri-iso-butyl-aluminium, Triethylaluminium und Trimethylaluminium.

Wenn die Komponente D) eingesetzt wird, ist sie bevorzugt in einer Menge von 800:1 bis 1:1, insbesondere 500:1 bis 50:1 (molares Verhältnis von M¹ aus I zu Übergangsmetall M aus IV) im Katalysatorsystem enthalten.

Weiterhin wird bei dem erfindungsgemäßen Verfahren ein Antistatikum verwendet. Generell können alle Antistatika, die für Polymerisationen geeignet sind, eingesetzt werden. Beispielsweise seien Salzgemische aus Calciumsalzen der Medialansäure und Chromsalzen der N-Stearylanthranilsäure genannt, wie in DE-A 3543360 beschrieben. Geeignete Antistatika sind auch C₁₂- bis C₂₂-Fettsäureseifen von Alkali- oder Erdalkalimetallen, Salze von Sulfonsäureestern mit der allgemeinen Formel (RR')-CHOSO₃Me, Ester von Polyethylenglykolen mit Fettsäuren, und Polyoxyethylenalkylether. Eine Übersicht über Antistatika ist auch in der EP-A 107 127 gegeben.

Weiterhin kann als Antistatikum eine Mischung aus einem Metallsalz der Medialansäure, einem Metallsalz der Anthranilsäure und einem Polyamin eingesetzt werden, wie in der EP-A 636 636 beschrieben.

Kommerziell erhältliche Produkte wie Stadis® 450 der Fa. Du Pont, eine Mischung aus Toluol, Isopropanol, Dodecylbenzolsulfonsäure, einem Polyamin, einem Copolymer aus Dec-1-en und SO₂ sowie Dec-1en oder ASA-3 der Fa. Shell können ebenfalls verwendet werden.

Vorzugsweise wird das Antistatikum als Lösung eingesetzt, im besonders bevorzugten Fall von Stadis® 450 werden bevorzugt 1 bis 50 Gew.-% dieser Lösung, vorzugsweise 5 bis 25 Gew.-%, bezogen auf die Masse des eingesetzten Trägerkatalysators (Träger, Metallocenkomplex und metalloceniumionenbildende Verbindung) verwendet. Die benötigten Mengen an Antistatikum können jedoch, je nach Art des eingesetzten Antistatikums, in weiten Bereichen schwanken.

Bei dem erfindungsgemäßen Verfahren kann man nun so vorgehen, daß man zunächst, in Anwesenheit des Antistatikums, eine Vorpolymerisation in Suspension, wobei als Suspensionsmittel Alkane, bevorzugt Heptan oder Isododekan geeignet sind, oder in flüssigem Monomeren durchführt.

Vorzugsweise geht man so vor, daß man den Träger, vorzugsweise einen anorganischen Träger, in einem Suspensionsmittel, bevorzugt Toluol, suspendiert, bei Temperaturen im Bereich von 0 bis 80°C mit einer Lösung der metalloceniumionenbildende Verbindung über einen Zeitraum von 5 bis 240 Minuten versetzt, dann 0,5 bis 48 Stunden bei Temperaturen im Bereich von 0 bis 80°C rührt, abfiltriert, wäscht und trocknet. Hierzu wird dann vorzugsweise eine Lösung des Metallocenkomplexes in einer Methylalumoxan-Lösung gegeben und bei Temperaturen im Bereich von 0 bis 80°C über einen Zeitraum von 5 bis 360 Minuten gemischt. Anschließend wird das Lösungsmittel entfernt und der entstandene Trägerkatalysator getrocknet.

Die eigentliche Polymerisation wird dann vorzugsweise in flüssigen Monomeren (bulk) oder in der Gasphase, vorzugsweise in gerührter Gasphase durchgeführt. Diese Verfahren sind an sich bekannt.

Vorzugsweise geht man so vor, daß man die Metallverbindung D), bevorzugt in einem Lösungsmittel wie Heptan vorlegt, das flüssige Alk-1-en hinzugibt und unter Rühren bei Temperaturen im Bereich von 0 bis 100°C den Trägerkatalysator zugibt. Die Polymerisationszeit kann im Bereich von 0,01 bis 24 Stunden liegen, bevorzugt 0,1 bis 5 Stunden. Für den Fall, daß man Copolymerisate herstellen möchte, so gibt man das oder die weiteren Monomere vorzugsweise während der eigentlichen Polymerisation hinzu, bevorzugt kontinuierlich.

Das erfindungsgemaße Verfahren zeichnet sich dadurch aus, daß es in technischem Maßstab durchgeführt werden kann, es treten keine Beläge auf, es bilden sich keine Agglomerate, die Produktivität der eingesetzten Katalystorsysteme wurde erhöht, die mit dem erfindungsgemäßen Verfahren hergestellten Polymerisate zeichnen sich durch eine enge Molekulargewichtsverteilung und gute Morphologie aus. Weiterhin konnten Polymerisate mit abgesenktem Schmelzpunkt erhalten werden.

### Beispiele

### Beispiel A: Herstellung des Metallocen-Trägerkatalysators

a) Mit Methylalumoxan (MAO) beladenes Kieselgel
   1000 g Kieselgel (SG 332, Porendurchmesser 50 µm, Fa. Grace; 8 h bei 180°C im Vakuum (1 mbar) ausgeheizt) wurde in 5 1 Toluol unter N₂-Atmosphäre suspendiert. Bei einer Temperatur von 18°C wurden 7.75 1 (6.38 kg) 1.53 molare Methylaluminoxanlösung (in Toluol, Fa. Witco) über 120 Minuten zugegeben. Anschließend wurde 7 h bei RT (Raumtemperatur) nachgerührt, filtriert und der Filterkuchen 2x mit je 2.5 1 Toluol gewaschen. Anschließend wurde im Vakuum getrocknet.
b) Beladung mit Metallocenkomplex
   1 kg des unter a) hergestellten MAO beladenen Kieselgels wurde in einem evakuierten Gefäß vorgelegt. Anschließend wurde unter Rühren eine Lösung von 5.8 g (10 mmol) rac.-Dimethylsilylenbis(2-methylbenzindenyl)zirkondichlorid in 1.32 l 1.53 molarer MAO-Lösung (in Toluol, Fa. Witco) zugegeben. Nach dem Druckausgleich mit N₂ wurde 30 Minuten bei RT (Raumtemperatur) durchgemischt. Dann wurde, zunächst bei 20°C, die Hauptmenge Lösungsmittel im Vakuum abdestilliert (bis kein Lösungsmittel mehr überging). Anschließend wurde die Temperatur in 5°C Schritten auf 55°C erhöht und der Katalysator solange getrocknet, bis er als oranges, gut rieselfähiges Pulver zurückblieb.

### Beispiel 1:

### Vergleichsbeispiel:

### PP-Homopolymerisation ohne Antistatikum (Bulk)

In einem trockenen, N₂ gespülten 1 l Autoklaven wurden 2.5 mmol Triisobutylaluminium (TIBA; 1.25 ml einer 2molaren Lösung in Heptan) vorgelegt. Nach Zugabe von 500 ml flüssigen Propens wurden unter Rühren bei RT 189 mg Trägerkatalysator über eine Schleuse mit N₂ eingeschossen und der Autoklav auf 60°C aufgeheizt. Nach 60 Minuten Reaktionszeit wurde die Polymerisation durch Ablassen des restlichen Propens abgebrochen und das Produkt über ein Bodenventil abgelassen. Es wurden 190 g Polymergrieß erhalten, der ca. 2 % Grobanteile > 5 mm Durchmesser enthält. Anschließend wurde der Autoklav geöffnet. Auf Wand und Rührer befand sich ein leichter Polymerbelag. Produktivität:
1005 g PP (Polypropylen)/g Träger-Katalysator.

### Beispiel 2:

### PP-Homopolymerisation mit Antistatikum (Bulk)

Beispiel 1 wurde mit 192 mg Trägerkatalysator mit dem Unterschied wiederholt, daß vor Zugabe des flüssigen Propens 10 mg einer kommerziellen Antistatikum-Lösung (Stadis® 450 Du Pont) zu dem vorgelegten Aluminiumalkyl gegeben wurden. Es wurden 216 g Polymergrieß ohne Grobanteile erhalten (Produktivität: 1125 g PP/g Trägerkatalysator). Autoklavenwand und Rührer waren belagfrei.

Angaben zu Stadis® 450:
50 bis 65 Gew.-% Toluol
1 bis 5 Gew.-% Isopropanol
1 bis 10 Gew.-% Dodecylbenzolsulfonsäure
polymeres Umsetzungsprodukt aus N-Alkyl-1,3-diaminopropan und Epichlorhydrin (Molverhältnis 1:1,5)
alternierendes Copolymer aus Dec-1-en und SO₂
Dec-1-en

### Beispiel 3:

### PP-Homopolymerisation mit Antistatikum (Bulk)

Beispiel 2 wurde mit 200 mg Trägerkatalysator und 20 mg Stadis-Lösung wiederholt. Es wurden 258 g Polymergrieß ohne Grobanteile erhalten (Produktivität: 1290 g PP/g Trägerkatalysator). Autoklavenwand und Rührer waren belagfrei.

### Beispiel 4:

### PP-Homopolymerisaiton mit Antistatikum (Gasphase)

Beispiel 3 wurde mit 194 mg Trägerkatalysator mit dem Unterschied wiederholt, daß nur 150 ml flüssiges Propen vorgelegt wurden, so daß nach dem Aufheizen in der Gasphase polymerisiert wurde. Hierbei wurde der Druck auf 24 bar konstant gehalten. Es wurden 194 g Polymergrieß ohne Grobanteile erhalten (Produktivität: 1000 g PP/g Trägerkatalysator). Autoklavenwand und Rührer waren belagfrei:

### Beispiel 5:

### Vergleichsbeispiel:

### PP-Homopolymerisation ohne Antistatikum (Bulk)

Beispiel 1 wurde mit 1005 mg Trägerkatalysator im 10 l Autoklaven wiederholt (20 mmol TIBA; 3000 g flüssiges Propen), wobei jedoch 90 Minuten polymerisiert wurde. Es wurden 1050 g Polymergrieß mit 5 Gew-% Grobanteil erhalten (Produktivität: 1044 g PP (Polypropylen)/g Trägerkatalysator). Die Autoklavenwand und der Rührer wiesen Polymerbeläge und Verschmelzungen auf.

### Beispiel 6:

### PP-Homopolymerisation mit Antistatikum (Bulk)

Beispiel 5 wurde mit 1024 mg Trägerkatalysator und 100 mg Antistatikum-Lösung wiederholt. Es wurden 2030 g Polymergrieß ohne Grobanteil erhalten (Schmelzpunkt Tₘ:142.1 °C, Zahlenmittelwert Mₙ : 119 000 g/mol, Gewichtsmittelwert M_{w} : 242 000; Produktivität: 1982 g PP/g Trägerkatalysator). Die Autoklavenwand und der Rührer waren belagfrei.

Die Zahlenmittelwerte Mₙ und Gewichtsmittelwerte M_{w} wurden mittels Gelpermeationschromatographie ermittelt.

### Beispiel 7:

### PP-Homopolymerisation mit Antistatikum (Bulk)

Beispiel 5 wurde mit 1080 mg Trägerkatalysator, 150 mg Antistatikum-Lösung und 30 mmol TIBA wiederholt. Es wurden 1690 g Polymergrieß ohne Grobanteil erhalten (Tₘ : 141.0°C,
Mₙ : 127 000 g/mol, M_{w} : 263 000; Produktivität: 1594 g PP/g Trägerkatalysator). Die Autoklavenwand und der Rührer waren belagfrei.

### Beispiel 8:

### Vergleichsbeispiel:

### PP-Homopolymerisation ohne Antistatikum (Gasphase)

Beispiel 5 wurde mit 1030 mg Trägerkatalysator wiederholt, wobei allerdings nur 1500 g flüssiges Propen vorgelegt wurden. Beim Aufheizen ging die Polymerisation in die Gasphase über und der Druck wurde auf 24 bar konstant gehalten. Nach 30 Minuten mußte die Polymerisation abgebrochen werden, da der Rührer durch Brocken teilweise blockiert wurde. Es wurden 290 g Polymergrieß und zusätzlich 50 g verschmolzenes Produkt erhalten (Produktivität: 330 g PP/g Trägerkatalysator). Autoklavenwand und Rührer wiesen starke Beläge und Verschmelzungen auf.

### Beispiel 9:

### PP-Homopolymerisation mit Antistatikum (Gasphase)

Beispiel 6 wurde mit 1083 mg Trägerkatalysator, 30 mmol TIBA und 150 mg Antistatikum-Lösung wiederholt, wobei allerdings nur 1500 g flüssiges Propen vorgelegt wurden. Beim Aufheizen ging die Polymerisation in die Gasphase über und der Druck wurde auf 24 bar konstant gehalten. Es wurden 1430 g Polymergrieß ohne Grobanteile erhalten (Produktivität: 1320 g PP/g Trägerkatalysator). Autoklavenwand und Rührer waren belagfrei.

### Beispiel 10:

### Ethen/Propen-Copolymerisation mit Antistatikum (Bulk)

Beispiel 7 wurde mit 1036 mg Metallocen-Trägerkatalysator wiederholt, wobei 3500 g flüssiges Propen vorgelegt wurden und während der Polymerisation kontinuierlich Ethen so zugefahren wurde, daß bei Polymerisationsende insgesamt 35 g Ethen zugefahren wurden. Es wurden 2070 g Polymergrieß ohne Grobanteile erhalten (Tₘ : 137.7°C, Mₙ : 133 000 g/mol, M_{w} : 262 000; Produktivität: 1920 g PP/g Trägerkatalysator). Autoklavenwand und Rührer waren belagfrei.

### Beispiel 11:

### Ethen/Propen-Copolymerisation mit Antistatikum (Bulk)

Beispiel 7 wurde mit 1020 mg Metallocen-Trägerkatalysator wiederholt, wobei 3500 g flüssiges Propen vorgelegt wurden und während der Polymerisation kontinuierlich Ethen so zugefahren wurde, daß bei Polymerisationsende insgesamt 70 g Ethen zugefahren worden waren. Es wurden 2020 g Polymergrieß ohne Grobanteile erhalten (Tₘ : 133.9°C, Mₙ : 102 000 g/mol; M_{w} : 210 000; Produktivität: 1980 g PP/g Trägerkatalysator). Autoklavenwand und Rührer waren belagfrei.

### Beispiel 12:

### Ethen/Propen-Copolymerisation mit Antistatikum (Bulk)

Beispiel 7 wurde mit 1033 mg Metallocen-Trägerkatalysator wiederholt, wobei 3500 g flüssiges Propen vorgelegt wurden und während der Polymerisation kontinuierlich Ethen so zugefahren wurde, daß bei Polymerisationsende insgesamt 105 g Ethen zugefahren worden waren. Es wurden 2280 g Polymergrieß ohne Grobanteile erhalten (Tₘ : 131.5°C, Mₙ : 96 000 g/mol, M_{w} : 197 000; Produktivität: 2207 g PP/g Trägerkatalysator). Autoklavenwand und Rührer waren belagfrei.

### Beispiel 13:

### Ethen/Propen-Copolymerisation mit Antistatikum (Bulk)

Beispiel 7 wurde mit 994 mg Metallocen-Trägerkatalysator wiederholt, wobei 3500 g flüssiges Propen vorgelegt wurden und während der Polymerisation kontinuierlich Ethen so zugefahren wurden, daß bei Polymerisationsende insgesamt 140 g Ethen zugefahren worden waren. Es wurden 2230 g Polymergrieß ohne Grobanteile erhalten (Tₘ : 128.9°C, Mₙ : 118 000 g/mol, M_{w} : 209 000; Produktivität: 2243 g PP/g Trägerkatalysator). Autoklavenwand und Rührer waren belagfrei.

### Beispiel 14:

### Ethen/Propen-Copolymerisation mit Antistatikum (Bulk)

Beispiel 7 wurde mit 973 mg Metallocen-Trägerkatalysator wiederholt, wobei 3500 g flüssiges Propen vorgelegt wurden und während der Polymerisation kontinuierlich Ethen so zugefahren wurde, daß bei Polymerisationsende insgesamt 175 g Ethen zugefahren worden waren. Es wurden 2180 g Polymergrieß ohne Grobanteile erhalten (Tₘ : 122.9°C, Mₙ : 123 000 g/mol, M_{w} : 192 000; Produktivität: 2240 g PP/g Trägerkatalysator). Autoklavenwand und Rührer waren belagfrei.

### Beispiel 15:

### Ethen/Propen-Copolymerisation mit Antistatikum (Gasphase)

Beispiel 13 wurde mit 1016 mg Metallocen-Trägerkatalysator wiederholt, wobei allerdings nur 1500 g flüssiges Propen vorgelegt wurden, sodaß die Polymerisation nach dem Aufheizen in der Gasphase fortgeführt wurde. Es wurden 2023 g Polymergrieß ohne Grobanteile erhalten Tₘ : 127.1°C; Produktivität: 1991 g PP/g Trägerkatalysator). Autoklavenwand und Rührer waren belagfrei.

### Beispiel 16

### Vergleichsbeispiel:

### Ethen/Propen-Copolymerisation ohne Antistatikum (Bulk)

Beispiel 10 wurde mit 1041 mg Metallocen-Trägerkatalysator, aber ohne Antistatikum, wiederholt. Nach 45 Minuten Polymerisationsdauer mußte die Polymerisation abgebrochen werden, da der Rührer durch Brocken und Verschmelzungen blockiert wurde (zu diesem Zeitpunkt waren 18 g Ethen zudosiert worden). Es wurden 532 g Polymergrieß und ca. 200 g stark verschmolzene Polymerbrocken (Durchmesser 1 - 7 cm) erhalten. Weiteres Produkt war an Rührerblatt und Autoklavenwand verschmolzen.

## Patentansprüche

1. Verfahren zur Herstellung von Polymerisaten von C₂- bis C₁₂-Alk-1-enen,wobei als Alk-1-ene
50 bis 100 mol-% Propen,
0 bis 50 mol-% Ethylen und
0 bis 20 mol-% C₄- bis C₁₂-Alk-1-enen
eingesetzt werden,
bei Temperaturen im Bereich von 0 bis 150°C und Drücken von 1 bis 80 bar in Gegenwart eines Katalysatorsystems, dadurch gekennzeichnet, daß man als Katalysatorsystem ein solches verwendet, das
A) einen anorganischen oder organischen Träger,
B) einen Metallocenkomplex der allgemeinen Formel IVc, 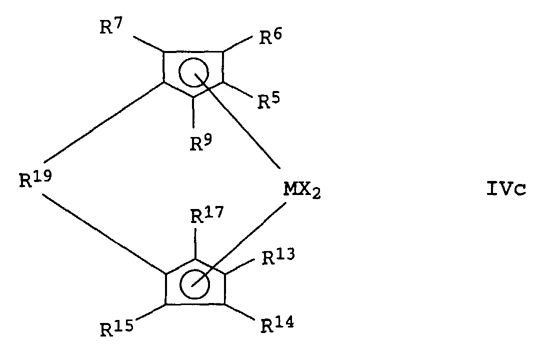 in der die Substituenten folgende Bedeutung haben:
M Titan, Zirkonium, Hafnium, Vanadium, Niob oder Tantal
X Fluor, Chlor, Brom, Iod, Wasserstoff, C₁- bis C₁₀-Alkyl, C₆- bis C₁₅-Aryl, Alkylaryl mit 1 bis 10 C-Atomen im Alkylrest und 6 bis 20 C-Atomen im Arylrest, -OR¹⁰ oder -NR¹⁰R¹¹,
wobei
R¹⁰ und R¹¹ C₁- bis C₁₀-Alkyl, C₆- bis C₁₅-Aryl, Alkylaryl, Arylalkyl, Fluoralkyl oder Fluoraryl mit jeweils 1 bis 10 C-Atomen im Alkylrest und 6 bis 20 C-Atomen im Arylrest bedeuten,
R⁵ bis R⁷, R⁹, R¹³ bis R¹⁵ und R¹⁷ Wasserstoff, C₁- bis C₁₀-Alkyl, 5- bis 7-gliedriges Cycloalkyl, das seinerseits ein C₁- bis C₁₀-Alkyl als Substituent tragen kann, C₆- bis C₁₅-Aryl oder Arylalkyl, wobei gegebenenfalls auch zwei benachbarte Reste gemeinsam für 4 bis 15 C-Atome aufweisende gesättigte oder ungesättigte cyclische Gruppen stehen können, oder Si(R¹²)₃ mit
R¹² C₁- bis C₁₀-Alkyl, C₃- bis C₁₀-cycloalkyl oder C₆- bis C₁₅-Aryl bedeuten,
R¹⁹ 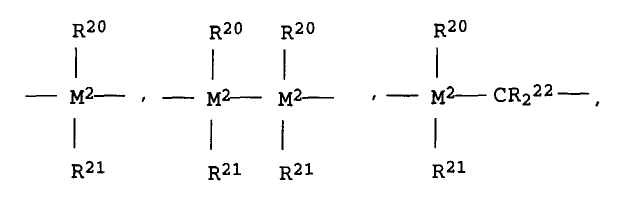 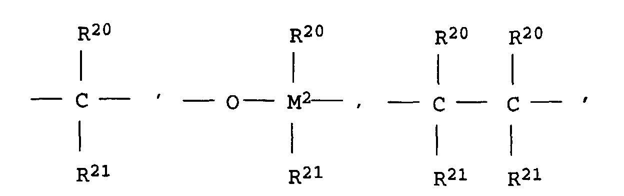 = BR²⁰, = AlR²⁰, -Ge-, -Sn-, -O-, -S-, = SO, = SO₂, = NR²⁰, = CO, = PR²⁰ oder = P(O)R²⁰ ist,
wobei
R²⁰, R²¹ und R²² gleich oder verschieden sind und ein Wasserstoffatom, ein Halogenatom, eine C₁-C₁₀-Alkylgruppe, eine C₁-C₁₀-Fluoralkylgruppe, eine C₆-C₁₀-Fluorarylgruppe, eine C₆-C₁₀-Arylgruppe, eine C₁-C₁₀-Alkoxygruppe, eine C₂-C₁₀-Alkenylgruppe, eine C₇-C₄₀-Arylalkylgruppe, eine C₈-C₄₀-Arylalkenylgruppe oder eine C₇-C₄₀-Alkylarylgruppe bedeuten oder wobei zwei benachbarte Reste jeweils mit den sie verbindenden Atomen einen Ring bilden, und
M² Silicium, Germanium oder Zinn ist,
C) eine metalloceniumionenbildende Verbindung und
D) gegebenenfalls eine Metallverbindung der allgemeinen Formel I
M¹ (R¹)ᵣ (R²)ₛ (R³)ₜ I
in der
M¹ ein Alkali-, ein Erdalkalimetall oder ein Metall der III. Hauptgruppe des Periodensystems bedeutet,
R¹ Wasserstoff, C₁- bis C₁₀-Alkyl, C₆- bis C₁₅-Aryl, Alkylaryl oder Arylalkyl mit jeweils 1 bis 10 C-Atomen im Alkylrest und 6 bis 20 C-Atomen im Arylrest,
R² und R³ Wasserstoff, Halogen, C₁- bis C₁₀-Alkyl, C₆- bis C₁₅-Aryl, Alkylaryl, Arylalkyl oder Alkoxy mit jeweils 1 bis 10 C-Atomen im Alkylrest und 6 bis 20 C-Atomen im Arylrest,
r eine ganze Zahl von 1 bis 3
und
s und t ganze Zahlen von 0 bis 2 bedeuten, wobei die Summe r+s+t der Wertigkeit von M¹ entspricht,
enthält,
und daß man bei der Polymerisation ein Antistatikum zugibt.

2. Verfahren nach Anspruch 1, dadurch gekennzeichnet, daß als Alk-1-ene
50 bis 100 mol-% Propen,
0 bis 30 mol-% Ethylen und
0 bis 20 mol-% C₄- bis C₁₂-Alk-1-ene
eingesetzt werden.

3. Verfahren nach Ansprüchen 1 bis 2, dadurch gekennzeichnet, daß die Polymerisation in flüssigen Monomeren oder in der Gasphase erfolgt.

4. Verfahren nach den Ansprüchen 1 bis 3, dadurch gekennzeichnet, daß die Polymerisation in der gerührten Gasphase erfolgt.

5. Verfahren nach den Ansprüchen 1 bis 4, dadurch gekennzeichnet, daß zunächst, in Anwesenheit des Antistatikums, eine Vorpolymerisation in Suspension oder flüssigem Monomeren erfolgt.

6. Verfahren nach den Ansprüchen 1 bis 5, dadurch gekennzeichnet, daß als metalloceniumionenbildende Verbindung C) offenkettige oder cyclische Alumoxanverbindungen der allgemeinen Formel II oder III 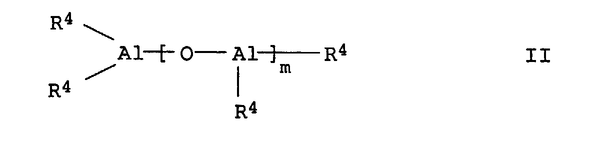 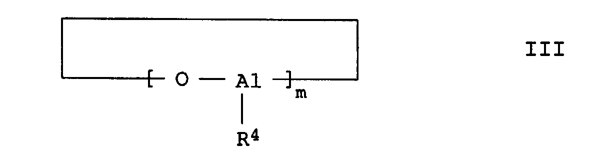 wobei
R⁴ eine C₁- bis C₄-Alkylgruppe bedeutet und m für eine ganze Zahl von 5 bis 30 steht,
eingesetzt werden.

## Claims

1. A process for the preparation of polymers of C₂-C₁₂-alk-1-enes, the alk-1-enes used comprising
from 50 to 100 mol% of propene,
from 0 to 50 mol% of ethylene and
from 0 to 20 mol% of C₄-C₁₂-alk-1-enes,
at from 0 to 150°C and from 1 to 80 bar in the presence of a catalyst system, wherein the catalyst system used is one which contains
A) an inorganic or organic carrier,
B) a metallocene complex of the formula IVc 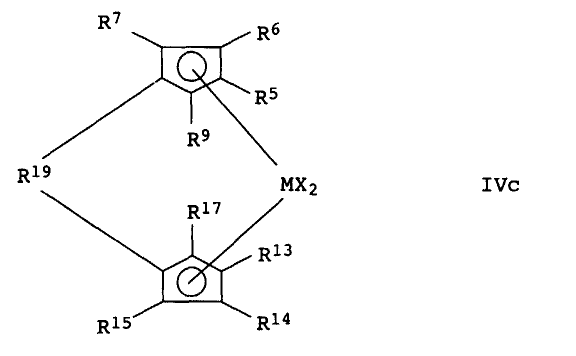 where
M is titanium, zirconium, hafnium, vanadium, niobium or tantalum
X is fluorine, chlorine, bromine, iodine, hydrogen, C₁-C₁₀-alkyl, C₆-C₁₅-aryl, alkylaryl having 1 to 10 carbon atoms in the alkyl radical and 6 to 20 carbon atoms in the aryl radical, -OR¹⁰ or -NR¹⁰R¹¹,
R¹⁰ and R¹¹ are each C₁-C₁₀-alkyl, C₆-C₁₅-aryl, alkylaryl, arylalkyl, fluoroalkyl or fluoroaryl, each having 1 to 10 carbon atoms in the alkyl radical and 6 to 20 carbon atoms in the aryl radical,
R⁵ to R⁷, R⁹, R¹³ to R¹⁵ and R¹⁷ are each hydrogen, C₁-C₁₀-alkyl, 5- to 7-membered cycloalkyl, which in turn may carry C₁-C₁₀-alkyl as substituent, C₆-C₁₅-aryl or arylalkyl, where two adjacent radicals together may furthermore form a saturated or unsaturated cyclic group of 4 to 15 carbon atoms, or Si(R¹²)₃,
R¹² is C₁-C₁₀-alkyl, C₃-C₁₀-cycloalkyl or C₆-C₁₅-aryl,
R¹⁹ is 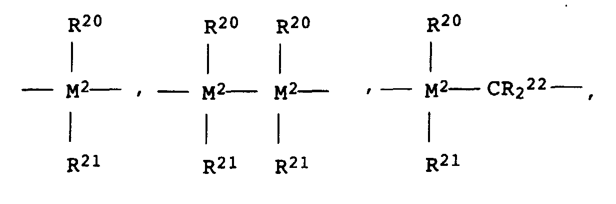 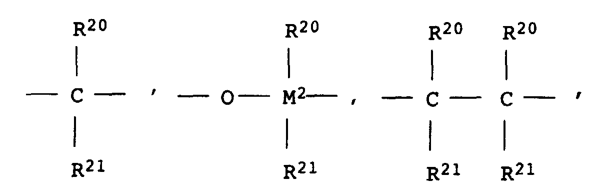 = BR²⁰, = AlR²⁰, -Ge-, -Sn-, -O-, -S-, = SO, = SO₂, = NR²⁰, = CO, = PR²⁰ or = P(O)R²⁰,
R²⁰, R²¹ and R²² are identical or different and are each hydrogen, halogen, C₁-C₁₀-alkyl, C₁-C₁₀-fluoroalkyl, C₆-C₁₀-fluoroaryl, C₆-C₁₀-aryl, C₁-C₁₀-alkoxy, C₂-C₁₀-alkenyl, C₇-C₄₀-arylalkyl, C₈-C₄₀-arylalkenyl or C₇-C₄₀-alkylaryl, or two adjacent radicals together with the atoms linking them form a ring, and
M² is silicon, germanium or tin,
C) a compound forming metallocenium ions and
D) if required, a metal compound of the formula I
M¹ (R¹)ᵣ (R²)ₛ (R³)ₜ I
where
M¹ is an alkali metal, an alkaline earth metal or a metal of main group III of the Periodic Table,
R¹ is hydrogen, C₁-C₁₀-alkyl, C₆-C₁₅-aryl, alkylaryl or arylalkyl, each having 1 to 10 carbon atoms in the alkyl radical and 6 to 20 carbon atoms in the aryl radical,
R² and R³ are each hydrogen, halogen, C₁-C₁₀-alkyl, C₆-C₁₅-aryl, alkylaryl, arylalkyl or alkoxy, each having 1 to 10 carbon atoms in the alkyl radical and 6 to 20 carbon atoms in the aryl radical,
r is an integer from 1 to 3
and
s and t are integers from 0 to 2, the sum r+s+t corresponding to the valency of M¹,
and wherein an antistatic agent is added during the polymerization.

2. A process as claimed in claim 1, wherein the alk-1-enes used comprise
from 50 to 100 mol% of propene,
from 0 to 30 mol% of ethylene and
from 0 to 20 mol% of C₄-C₁₂-alk-1-enes.

3. A process as claimed in claims 1 and 2, wherein the polymerization is carried out in liquid monomers or in the gas phase.

4. A process as claimed in any of claims 1 to 3, wherein the polymerization is carried out in the stirred gas phase.

5. A process as claimed in any of claims 1 to 4, wherein initially, in the presence of the antistatic agent, a prepolymerization is carried out in suspension or in the liquid monomer.

6. A process as claimed in any of claims 1 to 5, wherein an open-chain or cyclic alumoxane compound of the formula II or III 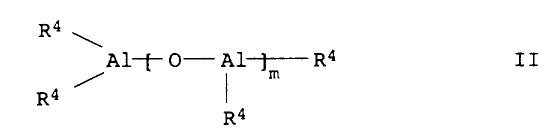 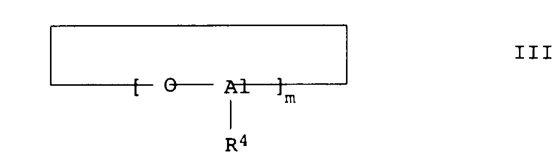 where
R⁴ is C₁-C₄-alkyl and m is an integer from 5 to 30,
is used as the compound C) forming metallocenium ions.

## Revendications

1. Procédé de préparation de polymères alc-1-ènes en C₂ à C₁₂, où l'on met en oeuvre, en tant qu'alc-1-énes,
de 50 à 100% molaires de propène,
de 0 à 50% molaires d'éthylène et
de 0 à20% molaires d'alc-1-ènes en C₄ à C₁₂,
à des températures de 0 à 150°C et des pressions de 1 à 80 bar, en présence d'un système catalytique, caractérisé en ce que l'on utilise comme système catalytique un système contenant
A) un support inorganique ou organique,
B) un complexe de métallocène de la formule générale IVc, 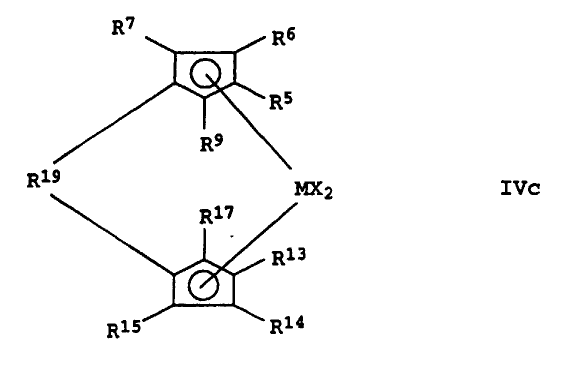 dans laquelle les substituants ont la signification suivante:
M représente le titane, le zirconium, l'hafnium, le vanadium, le niobium ou le tantale
X représente le fluor, le chlore, le brome, l'iode, l'hydrogène, un radical alkyle en C₁ à C₁₀, aryle en C₆ à C₁₅, alkylaryle comportant de 1 à 10 atomes de carbone dans le radical alkyle et de 6 à 20 atomes de carbone dans le radical aryle, -OR¹⁰ ou - NR¹⁰R¹¹,
où
R¹⁰ et R¹¹ représentent un radical alkyle en C₁ à C₁₀, aryle en C₆ à C₁₅, alkylaryle, arylalkyle, fluoroalkyle ou fluoroaryle comportant à chaque fois de 1 à 10 atomes de carbone dans le radical alkyle et de 6 à 20 atomes de carbone dans le radical aryle,
R⁵ à R⁷, R⁹, R¹³ à R¹⁵ et R¹⁷ représentent l'hydrogène, un radical alkyle en C₁ à C₁₀, cycloalkyle pentagonal à hexagonal, qui peut à son tour porter comme substituants des radicaux alkyle en C₁ à C₁₀, arylalkyle ou aryle en C₆ à C₁₅, deux restes voisins pouvant éventuellement aussi représenter ensemble des groupes cycliques saturés ou insaturés comportant de 4 à 15 atomes de carbone, ou bien Si(R¹²)₃, où
R¹² représente un radical alkyle en C₁ à C₁₀, cycloalkyle en C₃ à C₁₀ ou aryle en C₆ à C₁₅,
R¹⁹ représente 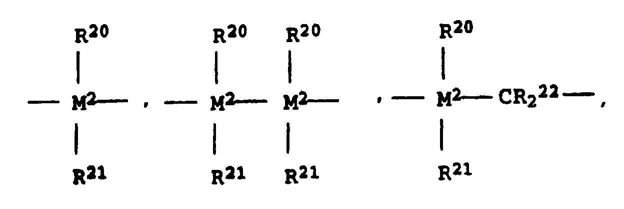 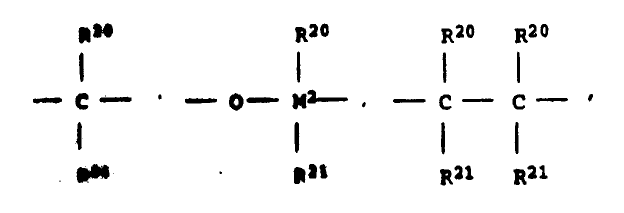 = BR²⁰, = AIR²⁰, -Ge-, -Sn-, -O-, -S-, = SO, = SO₂, =NR²⁰, =CO, = PR²⁰ ou = P(O)R²⁰,
où
R²⁰, R²¹ et R²² sont identiques ou différents et représentent un atome d'hydrogène, un atome d'halogène, un radical alkyle en C₁ à C₁₀, un radical fluoroalkyle en C₁ à C₁₀, un radical fluoroaryle en C₆ à C₁₀, un radical aryle en C₆ à C₁₀, un radical alcoxy en C₁ à C₁₀, un radical alcényle en C₂ à C₁₀, un radical arylalkyle en C₇ à C₄₀, un radical arylalcényle en C₈ à C₄₀ ou un radical alkylaryle en C₇ à C₄₀ ou bien où deux restes voisins forment à chaque fois un noyau avec les atomes qui les relient, et
M² représente le silicium, le germanium ou l'étain,
C) un composé formant des ions métallocénium et
D) éventuellement un composé métallique de la formule générale I
M¹ (R¹)ᵣ (R²)ₛ (R³)ₜ I
dans laquelle
M¹ représente un métal alcalin, un métal alcalino-terreux ou un métal du IIIème groupe du système périodique,
R¹ représente l'hydrogène, un radical alkyle en C₁ à C₁₀, aryle en C₆ à C₁₅, alkylaryle ou arylalkyle comportant à chaque fois de 1 à 10 atomes de carbone dans le radical alkyle et de 6 à 20 atomes de carbone dans le radical aryle,
R² et R³ représentent l'hydrogène, un halogène, un radical alkyle en C₁ à C₁₀, aryle en C₆ à C₁₅, alkylaryle, arylalkyle ou alcoxy comportant à chaque fois de 1 à 10 atomes de carbone dans la radical alkyle et de 6 à 20 atomes de carbone dans le radical aryle,
r est un nombre entier de 1 à 3
et
s et t sont des nombres entiers de 0 à 2, la somme r+s+t correspondant à la valence de M¹,
et en ce que l'on ajoute lors de la polymérisation un agent antistatique.

2. Procédé selon la revendication 1, caractérisé en ce que l'on utilise comme alc-1-ènes
de 50 à 100% molaires de propène,
de 0 à 30% molaires d'éthylène et
de 0 à 20% molaires d'alc-1-ène en C₄ à C₁₂.

3. Procédé selon les revendications 1 à 2, caractérisé en ce que la polymérisation est entreprise dans les monomères liquides ou en phase gazeuse.

4. Procédé selon les revendications 1 à 3, caractérisé en ce que la polymérisation est entreprise dans la phase gazeuse en turbulence.

5. Procédé selon les revendications 1 à 4, caractérisé en ce que l'on opère d'abord, en présence de l'agent antistatique, une prépolymérisation en suspension ou dans les monomères liquides.

6. Procédé selon les revendications 1 à 5, caractérisé en ce que l'on met en oeuvre, comme composé C) formant des ions métallocénium des composés d'alumoxane à chaîne ouverte ou cyclique de la formule générale II ou III 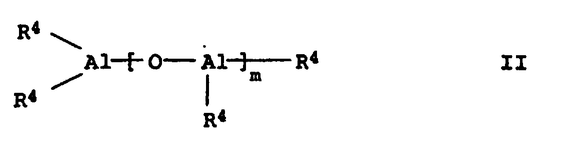 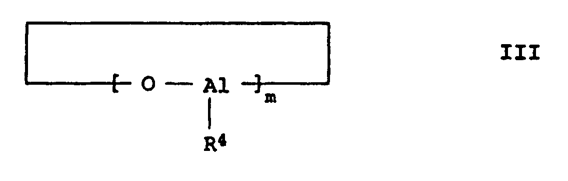 où
R⁴ représente un radical alkyle en C₁ à C₄ et m est un nombre entier de 5 à 30.
